# EUROPÄISCHE PATENTSCHRIFT

(11) **EP 3 407 369 B1**
(45) Veröffentlichungstag und Bekanntmachung des Hinweises auf die Patenterteilung: **26.02.2020**
(21) Anmeldenummer: 17172668.0
(22) Anmeldetag: 24.05.2017
(51) Int. Cl.: H01H 13/02, B60Q 3/64, B60Q 3/14, F21V 8/00, G02B 6/00, G02B 27/22

(54) **VORRICHTUNG, SYSTEM UND VERFAHREN ZUR DARSTELLUNG EINES SCHWEBENDEN LICHTSYMBOLS**
DEVICE, SYSTEM AND METHOD FOR PRODUCING A FLOATING LIGHT SYMBOL
DISPOSITIF, SYSTÈME ET PROCÉDÉ DE REPRÉSENTATION D'UN SYMBOLE LUMINEUX FLOTTANT

(43) Veröffentlichungstag der Anmeldung: 28.11.2018
(73) Patentinhaber: Flex Automotive GmbH, 70794 Filderstadt (DE)
(72) Erfinder: Wimbert, Frank, 73277 Owen (DE)
(74) Vertreter: Rupprecht, Kay

(56) Entgegenhaltungen:
- WO-A1-2017/038425
- DE-A1- 4 422 828
- DE-A1-102006 053 906
- DE-A1-102015 013 669
- FR-A1- 2 953 469
- US-A1- 2012 002 292

## Beschreibung

Die Erfindung betrifft eine Vorrichtung gemäß dem Oberbegriff des Anspruchs 1, insbesondere zur Darstellung eines schwebenden Lichtsymbols. Des Weiteren betrifft die vorliegende Erfindung ein System nach Anspruch 13 und ein Verfahren gemäß Anspruch 14.

Um (Bedien-)Schalter in beispielsweise Kraft- bzw. Nutzfahrzeugen oder dergleichen auch im Dunkeln erkennen und bedienen zu können, sind derartige Schalter mit einem hinterleuchteten Symbol ausgestaltet. Das Symbol in bzw. auf dem Schalter dient dazu, für einen Benutzer die spezifische Schalterfunktion zu kennzeichnen. Die Hinterleuchtung des Symbols erfolgt üblicherweise mittels eines in Sichtrichtung des Benutzers hinter dem Symbol bzw. dem sichtbaren Teil des Schalters angeordneten Leuchtmittels, z.B. einer LED oder dergleichen.

Das emittierte Licht des Leuchtmittels fällt durch das wenigstens teilweise transparente Symbol des (Bedien-)Schalters hindurch, sodass der Benutzer des Fahrzeuges den Schalter auch im Dunkeln erkennen bzw. identifizieren kann.

Auf diese Weise ist zu jedem möglichen Nutzungszeitpunkt, also insbesondere auch nachts, eine sichere, komfortable Erkennbarkeit und Bedienung derartiger Schalter, z.B. in Dachbedieneinheiten von Kraft-/Nutzfahrzeugen oder dergleichen, gewährleistet.

Neuere Entwicklungen von z.B. Lese- oder Innenleuchten werden häufig kapazitiv durch Berührung der Lichtscheibe geschaltet bzw. gesteuert. Um die Position der Lichtscheibe von derartig berührungsempfindlichen Elementen insbesondere auch im Dunkeln anzeigen zu können, werden hierfür beispielsweise umlaufende Lichtleiter eingesetzt. Solche umlaufenden Lichtleiter sind um das eigentliche Lichtfenster herum angeordnet.

Anhand derartiger Hinterleuchtungen eines (Schalter-)Symbols bzw. einer Lese- /Innenraumleuchte oder dergleichen ist jedoch kein weiterer visueller Effekt zur Kennzeichnung von Bedienelementen möglich. Vielmehr sind die Lösungen gemäß dem Stand der Technik auf die Ausgestaltung mit einer einfachen Hintergrundbeleuchtung, gegebenenfalls in Verbindung mit einem (teil-)transparenten Symbol, beschränkt. Dabei ist eine wesentliche Bauraumgröße zur Anordnung derartiger Hintergrundbeleuchtungen notwendig.

WO 2017/038425 A1 und US 2012/0002292 A1 offenbaren Vorrichtungen zur Darstellung eines schwebenden Lichtsymbols. Es ist Aufgabe der vorliegenden Erfindung eine Vorrichtung bereitzustellen, die eine vorteilhafte Kennzeichnung und Identifizierbarkeit von Schaltern ermöglicht, wobei die Vorrichtung einfach und kostengünstig herzustellen sowie verschleißarm, einfach Instand zu halten und platzsparend ausgestaltet ist. Des Weiteren ist es Aufgabe der vorliegenden Erfindung ein System mit einer solchen Vorrichtung sowie ein Verfahren zur Darstellung eines schwebenden Lichtsymbols bereitzustellen.

Eine erfindungsgemäße Vorrichtung ist durch den unabhängigen Patentanspruch 1 angegeben. Ein erfindungsgemäßes System sowie ein erfindungsgemäßes Verfahren werden in den nebengeordneten Ansprüche 13 und 14 benannt. Vorteilhafte Ausführungsformen sind jeweils in den abhängigen Patentansprüchen angegeben. Gemäß der vorliegenden Erfindung wird die zugrundeliegende Aufgabe durch eine Vorrichtung gelöst, mit einer Blende, die ein Lichtfenster aufweist, einer Primäroptik und einer Primärlichtquelle, deren emittiertes Primärlicht über durch die Primäroptik in eine Richtung des Lichtfensters gelenkt wird. Die wenigstens eine Sekundärlichtquelle ist versetzt, insbesondere seitlich versetzt, zu der Primärlichtquelle angeordnet und ein Zusatzlichtleiter verläuft zwischen der Primärlichtquelle und dem Lichtfenster, wobei der Zusatzlichtleiter ein pigmentiertes Symbol aufweist. Ein emittiertes Sekundärlicht der Sekundärlichtquelle ist derart in den Zusatzlichtleiter einkoppelbar, dass das Sekundärlicht wenigstens teilweise an dem pigmentierten Symbol reflektierbar und durch das Lichtfenster hindurch umlenkbar ist. Auf diese Weise kann anhand des wenigstens teilreflektierten Sekundärlichts der Sekundärlichtquelle auf vorteilhafte Weise eine zugehörige Bedieneinheit, unter anderem ein berührungsempfindliches Bedienelement, mittels eines schwebenden Lichtsymbols für den Benutzer gekennzeichnet werden.

Unter der Blende mit dem Lichtfenster ist insbesondere der für den Benutzer sichtbare Teil eines Bedienelementes zu verstehen. Ein Bedienelement kann insbesondere ein Leselicht, eine Innenleuchte, ein beliebiger Schalter oder dergleichen sein. Die Blende stellt somit eine Fassung zur Aufnahme der Lichtscheibe dar. Die Lichtscheibe ist vorzugsweise wenigstens teilweise transparent, sodass ein emittiertes Licht durch sie hindurchdringen kann.

Die Vorrichtung weist eine Primäroptik und eine Primärlichtquelle auf, deren emittiertes Primärlicht durch die Primäroptik in Richtung des Lichtfensters umlenkbar ist. Die Primärlichtquelle kann eine Leuchtdiode (LED) oder ein vergleichbares, zweckmäßig einsatzbares Leuchtmittel sein. Insbesondere ist die Primärlichtquelle zur Bereitstellung eines Hintergrundlichtes, eines Leselichtes oder eines Innenraumlichtes in einem Kraft- bzw. Nutzfahrzeug oder dergleichen vorgesehen. Mit der Primäroptik wird das emittierte Primärlicht der Primärlichtquelle insbesondere derart umgelenkt, dass zumindest der wesentliche Teil des emittierten Primärlichts in die Richtung des Lichtfensters verläuft. Hierzu ist die Primäroptik in der optischen Achse der Primärlichtquelle, zwischen der Primärlichtquelle und der Blende mit dem Lichtfenster, angeordnet. Vorteilhafter Weise ist somit eine energieeffiziente Ausleuchtung mit hinreichender Lichtstärke anhand des Primärlichts erzielbar.

Die wenigstens eine Sekundärlichtquelle ist versetzt zu der Primärlichtquelle angeordnet. Bevorzugter Weise ist die Sekundärlichtquelle seitlich versetzt zu der Primärlichtquelle angeordnet. Die Sekundärlichtquelle ist vorzugsweise horizontal, also orthogonal zu der optischen Achse der Primärlichtquelle, von der Primärlichtquelle beabstandet. So können die Primärlichtquelle und die Sekundärlichtquelle in zweckmäßiger Weise nebeneinander angeordnet sein. Auf diese Weise kann der Bauraum der erfindungsgemäßen Vorrichtung sowohl in vertikaler Richtung, also in Richtung der optischen Achse der Primärlichtquelle, als auch in horizontaler Richtung effizient genutzt werden. Alternativ ist es vorstellbar, die Sekundärlichtquelle in horizontaler und/oder vertikaler Richtung versetzt zueinander zu positionieren. Abhängig von dem vorgesehenen Einsatzzweck ist somit eine platzsparende und im Sinne des vorgesehenen Einsatzzweckes beliebig ausgestaltbare Anordnung der Primärlichtquelle und der Sekundärlichtquelle möglich.

Des Weiteren ist ein Zusatzlichtleiter vorgesehen, der zwischen der Primärlichtquelle und dem Lichtfenster verläuft. Insbesondere ist der Zusatzlichtleiter derart angeordnet, sodass der Zusatzlichtleiter zumindest mit einem Abschnitt die optische Achse der Primärlichtquelle in orthogonaler Richtung schneidet. Somit ragt der Zusatzlichtleiter, wenigstens mit einem Teil, durch das Feld des emittierten Primärlichts hindurch. Der Zusatzlichtleiter kann in diesem Sinne als eine optische Verbindung aufgefasst werden, die quer zum Primärlicht bzw. der optischen Achse der Primärlichtquelle verläuft. Hierzu ist der Sekundärlichtleiter zwischen der Unterseite des Lichtfensters, also der der Primärlichtquelle zugewandten Seite des Lichtfensters, und der Primärlichtquelle angeordnet. Genauer gesagt, ist der Zusatzlichtleiter zwischen der Unterseite des Lichtfensters und dem der Primärlichtquelle abgewandten Ende der Primäroptik vorgesehen. So ist eine optische Verbindung, orthogonal zur optischen Achse der Primärlichtquelle, also im Wesentlichen orthogonal zum emittierten Primärlicht, bereitstellbar.

Darüber hinaus ist der Zusatzlichtleiter mit einem pigmentierten Symbol vorgesehen. In diesem Sinne ist ein pigmentiertes Symbol auf dem Zusatzlichtleiter angeordnet, insbesondere auf einer Außenfläche des Zusatzlichtleiters fixiert. Unter der pigmentierten Ausgestaltung des Symbols ist im Sinne der vorliegenden Erfindung zu verstehen, dass das Symbol als eine Pigmentierung bereitgestellt ist. Vorzugsweise wird das Symbol hierbei in Form einer weißen Pigmentierung ausgestaltet. Insbesondere kann eine Pigmentierung vorgesehen sein, die eine vorteilhafte Lichtreflektion bereitstellt. Alternativ kann die Pigmentierung zweckmäßige Eigenschaften, beispielsweise eine spezifische Farbgebung zur Bereitstellung eines Warnhinweises oder dergleichen, aufweisen. Anhand des Zusatzlichtleiters mit dem pigmentierten Symbol ist somit eine vielfältige und individuelle Ausgestaltung der erfindungsgemäßen Vorrichtung zur Darstellung eines beliebig spezifischen, schwebenden Lichtsymbols möglich.

Unter einem schwebenden Lichtsymbol ist im Sinne der vorliegenden Erfindung insbesondere zu verstehen, dass der Benutzer z.B. eines Kraft- oder Nutzfahrzeuges das Lichtsymbol als schwebend wahrnimmt. Insbesondere ist das Lichtsymbol nicht als direkt auf einer Oberfläche eingeprägt erkennbar. Vielmehr wird dem Benutzer durch die Kombination des Primärlichts mit dem Sekundärlicht der Eindruck eines frei schwebenden Symbols vermittelt.

Gemäß der Erfindung ist ein emittiertes Sekundärlicht der Sekundärlichtquelle derart in den Zusatzlichtleiter einkoppelbar, dass das Sekundärlicht wenigstens teilweise an dem pigmentierten Symbol reflektierbar und durch das Lichtfenster hindurch umlenkbar ist. Die Umlenkung des Sekundärlichts bedeutet, dass das Sekundärlicht in die Richtung des Lichtfensters reflektiert bzw. umgelenkt werden kann, sodass das Sekundärlicht durch das Lichtfenster fällt. Vorzugsweise ist das Sekundärlicht derart umlenkbar, dass es nicht in einen Randbereich des Lichtfensters gelangt. So ist eine unzweckmäßige Reflektion bzw. Ablenkung des Sekundärlichts in dem Randbereich des Lichtfensters vermeidbar.

Insbesondere ist die Sekundärlichtquelle derart zweckmäßig gegenüber dem Zusatzlichtleiter angeordnet bzw. ausgerichtet, dass zumindest ein Großteil des emittierten Sekundärlichtes in den Zusatzlichtleiter eintreten kann. Des Weiteren ist beispielsweise eine Eintrittsfläche des Zusatzlichtleiters für das Sekundärlicht vorzugsweise derart vorgesehen, dass eine Reflektion sowie eine unzweckmäßige Ablenkung von eintretendem Sekundärlicht reduziert ist.

Darüber hinaus sind der Zusatzlichtleiter und die Sekundärlichtquelle bevorzugter Weise derart korrespondierend zueinander ausgestaltet, dass das Sekundärlicht auf das pigmentierte Symbol an dem Zusatzlichtleiter fällt und von dort aus reflektiert werden kann. Insbesondere ist vorgesehen, dass das einfallende Sekundärlicht im Wesentlichen von dem pigmentierten Symbol reflektiert wird. Zumindest wird jedoch eine wenigstens teilweise Reflektion des Sekundärlichts durch das pigmentierte Symbol erzielt. Hierzu können Eigenschaften der Sekundärlichtquelle, wie z.B. ihre (Winkel-)Ausrichtung gegenüber dem Zusatzlichtleiter, und des Zusatzlichtleiters, wie z.B. die geometrischen Abmessungen des Zusatzlichtleiters, zweckspezifisch ausgestaltbar bzw. aufeinander abgestimmt sein. Auf diese Weise ist eine optimale Lichtausbeute des emittierten Sekundärlichts erzielbar. Es wird eine maximale Reflektionslichtstärke, begründet durch die (Teil- )Reflektion an dem pigmentierten Symbol des Zusatzlichtleiters, erzielt. Die Kontur des pigmentierten Symbols zeichnet sich in dem Kontext der vorliegenden Erfindung anhand des reflektierten Sekundärlichts mit einer optimalen Lichtstärke ab. Der Schalter bzw. das Bedienelement wird für den Benutzer einfach erkennbar und identifizierbar, auch bei schlechten bzw. unvorteilhaften Lichtbedingungen.

Nach einer Ausführungsform ist der wenigstens eine Zusatzlichtleiter, der zwischen der Primärlichtquelle und dem Lichtfenster verläuft, in einem Abstand zu dem Lichtfenster oder an dem Lichtfenster angeordnet. Es kann vorgesehen sein, dass der Zusatzlichtleiter in direktem, vorzugsweise unmittelbarem Kontakt zu der Unterseite des Lichtfensters, die der Primärlichtquelle zugewandt ist, angeordnet ist. Es kann zwischen dem Zusatzlichtleiter und dem Lichtfenster eine zweckmäßige Fixierschicht, wie z.B. eine Klebeschicht, zur Fixierung des Zusatzlichtleiters vorgesehen sein. Vorzugsweise ist der Zusatzlichtleiter unmittelbar an dem Lichtfenster angeordnet.

Insbesondere kann die Anordnung des Zusatzlichtleiters derart an dem Lichtfenster vorgesehen, dass zwischen der Oberfläche des Zusatzlichtleiters und der Unterseite des Lichtfensters kein Medieneinschluss, insbesondere kein Lufteinschluss, vorliegt. Dies entspricht einer vorteilhafterweise platzsparenden sowie optisch vorteilhaften Ausgestaltung der erfindungsgemäßen Vorrichtung. Alternativ kann vorgesehen sein, dass der Zusatzlichtleiter in einem Abstand zu dem Lichtfenster positioniert ist. Der Abstand ist insbesondere als ein Luftspalt zwischen dem Zusatzlichtleiter und dem Lichtfenster vorgesehen. So ist eine beliebige und anwendungsspezifische Anordnung des Zusatzlichtleiters gegenüber dem Lichtfenster möglich. Es kann die optische Konfiguration sowie bauraumspezifische Gestaltung der Vorrichtung zweckmäßig adaptiert werden.

In einer weiteren Ausführungsform weist der Zusatzlichtleiter wenigstens abschnittsweise eine Scheibenform auf, sodass der Zusatzlichtleiter von der Vorderseite des Lichtfensters aus nicht sichtbar ist. Bevorzugter Weise ist der Zusatzlichtleiter von der der Primärlichtquelle abgewandten Oberseite des Lichtfensters für einen Benutzer nicht sichtbar. Zumindest der Bereich des Zusatzlichtleiters, der sich direkt unterhalb befindet, also an der Unterseite oder in einem Abstand zu der Unterseite des Zusatzlichtleiters, ist vorzugsweise scheibenförmig ausgestaltet.

Die scheibenförmige Ausgestaltung ist im Sinne der vorliegenden Erfindung derart aufzufassen, dass eine Breite des sich in Längsrichtung erstreckenden Zusatzlichtleiters wesentlich größer ist als eine Dicke des Zusatzlichtleiters. Der Lichtscheibe gegenüberliegend weist der Zusatzlichtleiter somit vorzugsweise eine flächige Ausgestaltung auf. So ist der Zusatzlichtleiter für einen Benutzer von der Vorderseite der Vorrichtung bzw. der Lichtscheibe vorteilhafter Weise nicht bzw. nur schlecht erkennbar. Es wird eine ästhetische Ausgestaltung der Vorrichtung im Anwendungsfall erzielt.

Alternativ kann der Zusatzlichtleiter direkt an der Blende angeordnet sein, wobei die Blende ohne Lichtfenster ausgestaltet sein kann. In diesem Sinne ist der der Zusatzlichtleiter vorzugsweise derart vorgesehen, dass er die Öffnung der Blende zweckmäßig verschließt. Ein Lichtfenster innerhalb der Blende ist in diesem Falle nicht notwendig. Insbesondere wird hierdurch der Vorteil erzielt, dass optische Übergange des Sekundärlichts zwischen dem Zusatzlichtleiter, dem Lichtfenster sowie der umgebenden Atmosphäre vermeidbar sind.

Gemäß einer weiteren Ausführungsform der vorliegenden Erfindung ist das pigmentierte Symbol im Bereich des Lichtfensters, insbesondere im Bereich einer optischen Achse der Primärlichtquelle, auf der der Primärlichtquelle zugewandten Seite des Zusatzlichtleiters angeordnet. Vorzugsweise ist das pigmentierte Symbol in der optischen Achse der Primärlichtquelle ausgerichtet. Auf diese Weise kann eine geeignete Ausrichtung des schwebenden Lichtsymbols gegenüber der Lichtscheibe und dem Primärlicht erzielt werden. Zumindest ist das pigmentierte Symbol auf einem Bereich des Zusatzlichtleiters anzuordnen, der dem Lichtfenster gegenüberliegt, sodass ein reflektiertes Sekundärlicht von dem pigmentierten Symbol aus durch das Lichtfenster hindurchtreten kann. Das pigmentierte Symbol ist in diesem Kontext bevorzugter Weise auf der Seite des Zusatzlichtleiters angeordnet, die der Primärlichtquelle entgegengerichtet und der Unterseite des Lichtfenster abgewandt ist. Somit kann ein Sekundärlicht, welches in den Zusatzlichtleiter eingekoppelt ist, auf das pigmentierte Symbol fallen und direkt in die Richtung des Lichtfenster umgelenkt bzw. (teil-)reflektiert werden. Auf diese Weise ist eine vorteilhafte, integrale und platzsparende Ausgestaltung der Vorrichtung zur Darstellung eines schwebenden Lichtsymbols verfügbar.

In einer alternativen Ausführung der Blende ohne Lichtfenster, ist der Zusatzlichtleiter vorzugsweise derart wenigstens teilweise scheibenförmig ausgestaltet, dass die Öffnung der Blende verschließbar ist.

Nach einer weiteren Ausführungsform ist das pigmentierte Symbol mittels Tampondruck auf dem Zusatzlichtleiter fixiert. Insbesondere kann eine vorgegebene Geometrie, im Wesentlichen in Form des erwünschten schwebenden Lichtsymbols, in einem einzelnen Verfahrensschritt als pigmentiertes Symbol auf dem Zusatzlichtleiter aufgebracht werden. Dies bedeutet, dass die Aufbringung auf dem Zusatzlichtleiter, abgesehen von dem Druckvorgang, keine weitere Bearbeitung der abgedruckten Form zur Abbildung des gewünschten pigmentierten Symbols zwingend notwendig macht. Ergänzend zu dem einzelnen Verfahrensschritt des Abdruckens können weitere Schritte im Zuge des Tampondrucks vorgesehen sein, die z.B. zur Trocknung, verbesserten Fixierung auf dem Zusatzlichtleiter oder dergleichen dienen können. Durch den Einsatz eines Tampondruck-Verfahrens zur Aufbringung des pigmentierten Symbols auf dem Zusatzlichtleiter steht eine einfache, zeitsparende, kostengünstige und im Zuge einer Massenproduktion, wie sie im Automobilbereich stattfindet, vielfach durchführbare Herstellungsmethode zur Verfügung.

In einer Ausführungsform der vorliegenden Erfindung weist die Vorrichtung eine Primärlichtkammer mit der Primärlichtquelle auf und wenigstens eine erste Sekundärlichtkammer, wobei in der ersten Sekundärlichtkammer die Sekundärlichtquelle angeordnet ist. Insbesondere können die Primärlichtkammer und die Sekundärlichtkammer durch Rippen der Blende voneinander getrennt sein. Dies bedeutet, dass derartige Rippen bzw. Trennwände der Blende zugeordnet bzw. an dieser vorgesehen sein können. Auf diese Weise kann vorzugsweise anhand der Blende ein Bereich an der Unterseite bzw. Rückseite des Lichtfensters in mehrere Kammern bzw. Arbeitskammern unterteilt werden. Alternativ können derartige Rippen bzw. Trennwände auch anderweitig, unabhängig von der Blende, vorgesehen sein, um den Bereich entlang der Unterseite der Blende zweckmäßig zu unterteilen.

Des Weiteren kann vorzugsweise mehr als eine Sekundärlichtkammer, insbesondere zwei Sekundärlichtkammern, vorgesehen sein, wobei jede Sekundärlichtkammer derart an die Primärlichtkammer anschließt, dass eine optische Verbindung zur gezielten Überführung von Sekundärlicht durch die Primärlichtkammer mittels des Zusatzlichtleiters bereitstellbar ist. Insbesondere beschreibt die gezielte Überführung von Sekundärlicht durch bzw. in die Primärlichtkammer dabei die spezifische Führung von Sekundärlicht anhand des Zusatzlichtleiters mit dem Ziel, eine maximale Reflektion von Sekundärlicht an dem pigmentierten Symbol zu erreichen, ohne das störende Einflüsse durch das Sekundärlicht innerhalb der Primärlichtkammer entstehen.

Nach einer weiteren Ausführungsform sind die Primärlichtkammer und die wenigstens eine erste Sekundärlichtkammer im Wesentlichen lichtdicht voneinander getrennt. Insbesondere erfolgt die lichtdichte Abtrennung zwischen der Primärlichtkammer und der wenigstens einen Sekundärlichtkammer derart, dass kein direktes Sekundärlicht in die Primärkammer in ungezielter bzw. ungeführter Form eintreten oder durch das Lichtfenster hindurchtreten kann. Vorzugsweise sind die Rippen bzw. Trennwände zwischen der wenigstens ersten Sekundärlichtkammer und der Primärlichtkammer derart vorgesehen, dass kein Primärlicht in die Sekundärlichtkammer eintreten kann und Sekundärlicht aus der Sekundärlichtkammer ausschließlich über den Zusatzlichtleiter in die Primärlichtkammer übertragbar ist. Insbesondere ist die Ausgestaltung der Primärlichtkammer und der vorzugsweise mehreren Sekundärlichtkammern derart vorgesehen, dass ein unkontrollierter Lichtübertritt zwischen der Primärlichtkammer und der Sekundärlichtkammer im Wesentlichen vermeidbar ist. Auf diese Weise sind kontrollierte Lichtbedingungen bereitstellbar und das Auftreten ungewünschten Streulichts, insbesondere innerhalb der Primärlichtkammer, ist vermeidbar. Es wird eine zweckmäßige, kontrollierte sowie deutliche bzw. möglichst kontrastreiche Darstellung eines schwebenden Lichtsymbols ermöglicht.

In einer Ausführungsform ist der Zusatzlichtleiter mit einem ersten Ende in der ersten Sekundärlichtkammer, insbesondere einer Lichteintrittskammer, angeordnet. Mit einem zweiten Ende ist der Zusatzlichtleiter in einer zweiten Sekundärlichtkammer, insbesondere ausgestaltet als eine Lichtaustrittskammer und/oder als eine zweite Lichteintrittskammer mit einer zweiten Sekundärlichtquelle, angeordnet.

Des Weiteren ist gemäß einer Ausführungsform vorgesehen, dass der Zusatzlichtleiter derart angeordnet ist, dass die erste und die zweite Sekundärlichtkammer über die dazwischenliegende Primärlichtkammer hinweg optisch verbunden sind, sodass ein Sekundärlicht von der ersten Sekundärlichtkammer in die zweite Sekundärlichtkammer, insbesondere zwischen der ersten und zweiten Sekundärlichtkammer, übertragbar ist.

Insbesondere sind die erste und zweite Sekundärlichtkammer an der Primärlichtkammer derart angeordnet bzw. angeschlossen, dass eine optische Verbindung zwischen den Sekundärlichtkammern und der Primärlichtkammer anhand des Zusatzlichtleiters herstellbar ist. Vorzugsweise sind die erste und zweite Sekundärlichtkammer anhand des Zusatzlichtleiters über die Primärlichtkammer hinweg optisch miteinander verbunden bzw. verbindbar. Die erste und zweite Sekundärlichtkammer sind bevorzugter Weise derart gegenüber der Primärlichtkammer angeordnet, dass die geradlinige optische Verbindung der ersten Sekundärlichtkammer mit der zweiten Sekundärlichtkammer, insbesondere der Zusatzlichtleiter, orthogonal zu der optischen Achse der Primärlichtquelle verläuft. Auf diese Weise ist ein Sekundärlicht zwischen der ersten und der zweiten Sekundärlichtkammer bzw. zwischen der zweiten und der ersten Sekundärlichtkammer übertragbar.

Die erste Sekundärlichtkammer kann als Lichteintrittskammer vorgesehen sein. Dies bedeutet, dass ein Sekundärlicht mittels einer Sekundärlichtquelle innerhalb der ersten Sekundärlichtkammer an dem ersten Ende in den Zusatzlichtleiter einkoppelbar ist. So kann ein Sekundärlicht von der ersten Sekundärlichtkammer aus über den Zusatzlichtleiter übertragen werden. Die zweite Sekundärlichtkammer kann als Lichtaustrittskammer oder als eine zweite Lichteintrittskammer vorgesehen sein. Insbesondere ist vorgesehen, dass ein zweites Ende des Zusatzlichtleiters für ein eingekoppeltes Sekundärlicht als Lichtaustrittsende dient. An diesem zweiten Ende bzw. Lichtaustrittsende kann das Sekundärlicht aus dem Zusatzlichtleiter gezielt austreten bzw. ausgekoppelt werden.

Alternativ kann das zweite Ende des Zusatzlichtleiters in der zweiten Sekundärlichtkammer, als eine zweite Lichteintrittskammer, zur Einkopplung von Sekundärlicht eingesetzt werden. Insbesondere können zwei Sekundärlichtquellen zur Einkopplung von Sekundärlicht in den Zusatzlichtleiter vorgesehen sein. Bei Einsatz mehrerer Sekundärlichtquellen ist zu berücksichtigen, dass an den jeweils gegenüberliegenden Enden des Zusatzlichtleiters nicht nur Sekundärlicht eingekoppelt wird. Auch wird bereits übertragenes Sekundärlicht aus einer anderen Sekundärlichtkammer bzw. Sekundärlichtquelle an den gegenüberliegenden Enden des Zusatzlichtleiters wenigstens teilweise ausgekoppelt. In diesem Sinne wirken die erste und die zweite Sekundärlichtkammer gleichzeitig als Lichteintrittskammer und Lichtaustrittskammer. Auf diese Weise ist eine beliebige Menge an Sekundärlicht in beliebiger und zweckspezifischer Form in den Zusatzlichtleiter einkoppelbar. Des Weiteren wird die, vorzugsweise gezielte, Auskopplung von Sekundärlicht aus dem Zusatzlichtleiter in der Sekundärlichtkammer zur Verfügung gestellt. In Verbindung mit der im Wesentlichen lichtdichten Trennung zwischen Sekundärund Primärlichtkammer, ist ein gezielter Einsatz von Sekundärlicht zur Darstellung eines schwebenden Lichtsymbols verfügbar.

In einer weiteren Ausführungsform weist der Zusatzlichtleiter eine vorzugsweise gerade optische Strecke zur optischen Verbindung der ersten Sekundärlichtkammer und der zweiten Sekundärlichtkammer, über die Primärlichtkammer hinweg, auf. An den Enden der (geraden) optischen Strecke sind vorzugsweise Zusatzlichtleiterschrägen zur Umlenkung des Sekundärlichts vorgesehen. Auf diese Weise ist ein Sekundärlicht anhand der Zusatzlichtleiterschrägen derart umlenkbar und/oder auskoppelbar, dass ein störender Einfluss von Streulicht innerhalb des Zusatzlichtleiters minimiert wird. Des Weiteren wird anhand der optischen Strecke des Zusatzlichtleiters ebenso eine möglichst geringfügige Streuung sowie eine zweckmäßige Steuerbarkeit der Reflektion des Sekundärlichts innerhalb des Zusatzlichtleiters sichergestellt.

Nach einer Ausführungsform der erfindungsgemäßen Vorrichtung ist das Sekundärlicht derart in den Zusatzlichtleiter einkoppelbar, dass innerhalb des Zusatzlichtleiters im Wesentlichen die Totalreflektionsbedingung erfüllt ist. Insbesondere ist der Zusatzlichtleiter, insbesondere in Kombination mit der wenigstens einen Sekundärlichtquelle, derart ausgestaltet, dass die Totalreflektionsbedingung innerhalb des Zusatzlichtleiters zur Weiterleitung von Sekundärlicht erfüllt ist. Vorzugsweise kann das eingekoppelte Sekundärlicht vollständig, zumindest jedoch zu einem wesentlichen Anteil, innerhalb des Zusatzlichtleiters weitergeleitet werden. So sind eine optimale Ausnutzung des eingekoppelten Sekundärlichts sowie eine maximale (Teil-)Reflektion an dem pigmentierten Symbol bereitstellbar. Ein störender Einfluss durch Streuung des Sekundärlichts wird vorzugsweise vermieden.

Gemäß einer weiteren Ausführungsform sind die Primärlichtquelle und die Sekundärlichtquelle jeweils als eine Leuchtdiode (LED) vorgesehen, vorzugsweise angeordnet auf einer gemeinsamen Leiterplatte. Alternativ können die Primärlichtquelle und die Sekundärlichtquelle als ein anderweitig ausgestaltetes, zweckmäßig einsetzbares Leuchtmittel vorgesehen sein. Die Leiterplatte kann als eine handelsübliche Leiterplatte bzw. Leiterplatine, als eine flexible Leiterfolie bzw. Dünnschicht-Folie oder dergleichen ausgebildet sein. Auf diese Weise ist die erfindungsgemäße Vorrichtung anwendungsspezifisch ausgestaltbar, insbesondere hinsichtlich der Art der Leuchtmittel zur Erzielung einer gewünschten Leuchtstärke bzw. Ausleuchtung zur zweckmäßigen Darstellung eines schwebenden Lichtsymbols.

Mit einem nebengeordneten Aspekt bezieht sich die vorliegende Erfindung auf ein System, insbesondere ein Kraftfahrzeug und/oder ein Nutzfahrzeug, mit wenigstens einer erfindungsgemäßen Vorrichtung. Als ein System, in dem eine erfindungsgemäße Vorrichtung einsetzbar ist, können neben Kraft-/Nutzfahrzeugen auch Schienenfahrzeuge, mobile Wohneinheiten wie Wohnwägen oder dergleichen vorgesehen sein. In diesem Sinne ist die erfindungsgemäße Vorrichtung vornehmlich in Innenräumen von mobilen Systemen einsetzbar, die Bedieneinheiten wie Schalter und insbesondere Lese- und Innenraumleuchten aufweisen.

In einem weiteren nebengeordneten Aspekt bezieht sich die vorliegende Erfindung auf ein Verfahren zur Darstellung eines schwebenden Lichtsymbols mit einer erfindungsgemäßen Vorrichtung. Das Primärlicht wird entlang der optischen Achse der Primärlichtquelle anhand der Primäroptik umgelenkt und tritt durch das Lichtfenster der Blende hindurch. Das Sekundärlicht wird in einem Abstand zu der Primärlichtquelle, insbesondere seitlich versetzt zu der Primärlichtquelle, in den Zusatzlichtleiter eingekoppelt, wobei entlang des Zusatzlichtleiters im Wesentlichen die Totalreflektionsbedingung erfüllt wird. Eine Reflektion, insbesondere eine Teilreflektion, des Sekundärlichts an dem pigmentierten Symbol des Zusatzlichtleiters erfolgt derart, dass wenigstens ein Teil des Sekundärlichts als Streulicht durch das Lichtfenster hindurchtritt. Auf vorteilhafte Weise ist somit ein schwebendes Lichtsymbol Leselicht oder Innenraumlicht für den Benutzer z.B. eines Kraft- oder Nutzfahrzeuges darstellbar.

In einer Ausführungsform des erfindungsgemäßen Verfahrens wird das pigmentierte Symbol auf der der Primärlichtquelle zugewandten Unterseite des Zusatzlichtleiters mittels Tampondruck aufgebracht. Durch den Einsatz des Tampondruck-Verfahrens zur Abbildung des pigmentierten Lichtsymbols auf dem Zusatzlichtleiter ist eine kostengünstige Herstellung und vielfältig ausgestaltbare Formgebung verfügbar. Des Weiteren kann das pigmentierte Symbol beispielsweise in der Farbgebung und Reflektionseigenschaften, beispielsweise durch eine spezifisehe Ausgestaltung der (reflektierenden) Oberfläche des pigmentierten Symbols, konfigurierbar sein. Auf diese Weise ist eine vorteilhafte Darstellung eines schwebenden Lichtsymbols möglich.

Die Erfindung wird im Folgenden anhand von Ausführungsbeispielen unter Bezug auf die beigefügte schematische Zeichnung näher erläutert. Weitere Ausführungsformen des erfindungsgemäßen Gegenstandes sollen im Sinne der vorliegenden Erfindung hierdurch nicht ausgeschlossen sein.

Es zeigen schematisch:
- Fig. 1:: eine Vorrichtung gemäß dem Stand der Technik;
- Fig. 2:: ein erstes Ausführungsbeispiel einer erfindungsgemäßen Vorrichtung mit einseitiger Sekundärlicht-Einkopplung;
- Fig. 3:: ein zweites Ausführungsbeispiel einer erfindungsgemäßen Vorrichtung mit einseitiger Sekundärlicht-Einkopplung; und
- Fig. 4:: ein drittes Ausführungsbeispiel einer erfindungsgemäßen Vorrichtung mit zweiseitiger Sekundärlicht-Einkopplung.

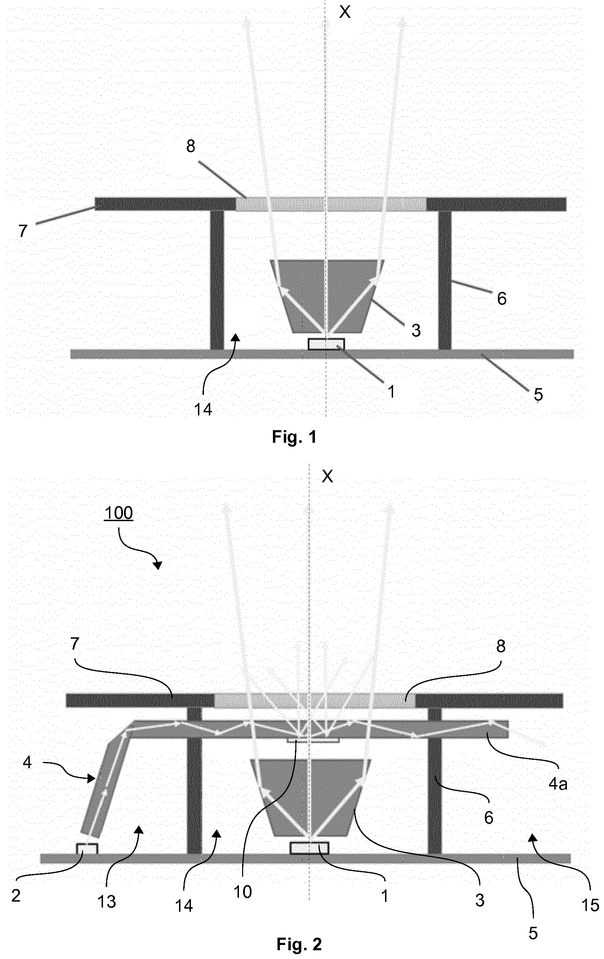

In Fig. 1 ist eine Vorrichtung, insbesondere ein Leselicht oder ein Innenraumlicht, gemäß dem Stand der Technik gezeigt. De Vorrichtung weist eine Primärlichtquelle 1 auf einer Leiterplatte 5 auf. Eine Primäroptik 3 ist derart in einer optischen Achse X der Primärlichtquelle ausgerichtet, dass wenigstens ein Großteil eines emittierten Primärlichts der Primärlichtquelle 1 in die Richtung eines Lichtfensters 8 der Vorrichtung gelenkt wird.

Das Lichtfenster 8 ist in einer Blende 7 eingefasst. Die Blende 7 ist mit Hilfe von Rippen 6 auf der Leiterplatte 5 aufgesetzt. Gemäß Fig. 1 sind die zwei Rippen 6 derart vorgesehen, dass eine Primärlichtkammer 14 mit der Primärlichtquelle 1 und der Primäroptik 3 ausgebildet wird. Die Primärlichtkammer 14 wird des Weiteren von der Blende 7 mit dem Lichtfenster 8 und der Leiterplatte 5 begrenzt. Das Lichtfenster 8 ist in der optischen Achse X der Primärlichtquelle 1 ausgerichtet, sodass die emittierte Primärlichtstrahlung von der Primärlichtquelle 1 durch die Primäroptik 3 und das Lichtfenster 8 austreten kann. Somit wird insbesondere ein Leselicht oder ein Innenraumlicht gemäß dem Stand der Technik bereitgestellt. Vergleichbare Anordnungen einer Hintergrundbeleuchtung sind für Schalter bzw. Bedienelemente denkbar.

In Fig. 2 ist ein erstes Ausführungsbeispiel einer erfindungsgemäßen Vorrichtung 100 dargestellt. Über die Vorrichtung gemäß dem Stand der Technik nach Fig. 1 hinausgehend, weist die Vorrichtung 100 nach Fig. 2 eine Sekundärlichtquelle 2 auf der Leiterplatte 5 auf. Die Sekundärlichtquelle 2 ist seitlich versetzt zu der Primärlichtquelle 1 angeordnet. Insbesondere ist die Sekundärlichtquelle außerhalb der Primärlichtkammer 14, jenseits der Rippe bzw. Trennwand 6 auf der Leiterplatte 5 vorgesehen. In diesem Sinne wird eine erste Sekundärlichtkammer 13 mit der Sekundärlichtquelle 2 ausgebildet. Die erste Sekundärlichtkammer 13 ist gemäß Fig. 2 durch die Leiterplatte 5, eine der Rippen 6 sowie die Blende 7 begrenzt.

Des Weiteren weist die Vorrichtung 100 einen Zusatzlichtleiter 4 auf. Der Zusatzlichtleiter 4 ist mit einem ersten Ende oberhalb der Sekundärlichtquelle 2 angeordnet, sodass ein emittiertes Sekundärlicht in den Zusatzlichtleiter 4 einkoppelbar bzw. einleitbar ist. In diesem Sinne ist die erste Sekundärlichtkammer 13 als eine Lichteintrittskammer vorgesehen. Der Zusatzlichtleiter 4 erstreckt sich hierzu gemäß Fig. 2 von seinem ersten Ende aus vorzugsweise in einem Winkel zwischen 60 bis 80 Grad in Richtung der Blende 7.

Unterhalb der Blende 7 erstreckt sich der Zusatzlichtleiter 4 mit einer gerade ausgestalteten, optischen Strecke 4a, die in einem Abstand zu der der Primärlichtquelle 2 zugewandten Unterseite des Lichtfensters 8 bzw. der Blende 7 verläuft. Die gerade optische Strecke 4a des Zusatzlichtleiters 4 endet an einem zweiten Ende des Zusatzlichtleiters 4. Mit der geraden optischen Strecke 4a stellt der Zusatzlichtleiters gemäß Fig. 2 eine optische Verbindung zwischen der ersten Sekundärlichtkammer 13 und einer zweiten Sekundärlichtkammer 15, über die Primärlichtkammer 14 hinweg, bereit. Das zweite Ende des Zusatzlichtleiters 4 ist in der zweiten Sekundärlichtkammer 15 angeordnet.

Des Weiteren weist der Zusatzlichtleiter 4 an einem Übergang zwischen dem ersten Ende und der geraden optische Strecke 4 eine der Blende zugewandte, abgeschrägte Außenseite, eine sogenannte Zusatzlichtleiterschräge, auf. So kann ein emittiertes, eingekoppeltes Sekundärlicht von dem ersten Ende aus in die gerade optische Strecke 4a des Zusatzlichtleiters 4 umgelenkt werden, vorzugsweise im Sinne einer Totalreflektion. Vorzugsweise kann die abgeschrägte Außenseite an dem Übergang gegenüber der geraden optischen Strecke 4a gegenüber der Horizontalen nach Fig. 2 einen Winkel zwischen 30 und 60 Grad, insbesondere 45 Grad, aufweisen.

An dem zweiten Ende des Zusatzlichtleiters 4 kann das eingekoppelte und überführte Sekundärlicht wenigstens zu einem Großteil aus dem Zusatzlichtleiter 4 austreten bzw. ausgekoppelt werden. Nach Fig. 2 ist das zweite Ende des Zusatzlichtleiters 4 orthogonal zur Verlaufsrichtung der geraden optischen Strecke abgeschlossen. So ist die zweite Sekundärlichtkammer 15 nach Fig. 2 als eine Lichtaustrittskammer vorgesehen. Gemäß Fig. 2 ist anhand der einzelnen Sekundärlichtquelle 2 in der ersten Sekundärlichtkammer 13 eine einseitige Einkopplung von Sekundärlicht gezeigt.

Des Weiteren ist der Zusatzlichtleiter 4, insbesondere mit der geraden optischen Strecke 4a, in einem Abstand zu der Unterseite des Lichtfensters 8 und oberhalb der Primäroptik 3 angeordnet. Dabei verläuft die gerade optische Strecke 4a in orthogonaler Richtung durch die optische Achse X der Primärlichtquelle 1. Anhand der in Fig. 2 gezeigten Ausgestaltung der Vorrichtung 100 mit dem Zusatzlichtleiter 4, ist ein emittiertes Sekundärlicht, vorzugsweise durch Totalreflektion innerhalb des Zusatzlichtleiters 4, übertragbar.

Darüber hinaus sind die erste Sekundärlichtkammer, die zweite Sekundärlichtkammer 15 und die Primärlichtkammer 14 durch die Rippen 6 derart lichtdicht voneinander abgegrenzt, dass ein Sekundärlicht vorzugsweise ausschließlich entlang des Zusatzlichtleiters 4 zwischen den Sekundärlichtkammern 13; 15 übertragbar ist. Ebenso bedeutet die lichtdichte Abtrennung der Lichtkammern voneinander, dass vorzugsweise kein emittiertes Primärlicht von der Primärlichtkammer 14 in die erste oder zweite Sekundärlichtkammer 13; 15 übertreten kann. Auf diese Weise wird störendes Streulicht innerhalb der Vorrichtung 100 vermieden und ein gezielter Einsatz des emittierten Primärlichts und Sekundärlichts ermöglicht.

An dem Zusatzlichtleiter 4, insbesondere entlang der geraden optischen Strecke 4a, ist gemäß Fig. 2 ein pigmentiertes Symbol 10 angeordnet. Das pigmentierte Symbol 10 ist an einer Unterseite der geraden optischen Strecke 4a des Zusatzlichtleiters 4, die der Primärlichtquelle 1 zugewandt ist, angebracht. Des Weiteren ist das pigmentierte Symbol 10 in der optischen Achse X der Primärlichtquelle 1 positioniert. Gemäß Fig. 2 wird das Sekundärlicht derart in den Zusatzlichtleiter 4 eingekoppelt, dass das Sekundärlicht 4 beim Durchgang durch den Zusatzlichtleiter 4 auf das pigmentierte Symbol 10 einfällt.

Das einfallende Sekundärlicht wird von dem pigmentierten Symbol 10 reflektiert. Vorzugsweise wird das einfallende Sekundärlicht zu einem wesentlichen Großteil derart von dem pigmentierten Symbol 10 reflektiert, dass das reflektierte Sekundärlicht durch das Lichtfenster 8 hindurchfällt. Vorzugsweise kann das pigmentierte Symbol 10 hierzu ein weißes pigmentiertes Symbol sein, dass mittels Tampondruck auf dem Zusatzlichtleiter 4 aufgebracht ist. Der Zusatzlichtleiter 4 ist gemäß Fig. 2 derart ausgestaltet, dass ein Sekundärlicht von einer auf der Leiterplatte 5 angeordneten Sekundärlichtquelle 2 derart auf ein pigmentiertes Symbol 10 umlenkbar ist, dass das vom pigmentierten Symbol 10 reflektierte Sekundärlicht, insbesondere innerhalb eines Lichtkegels des Primärlichts, durch das Lichtfenster 8 hindurchfällt. Das Sekundärlicht wird insbesondere derart reflektiert, dass es nicht in einen Randbereich der Lichtscheibe 7 gelangt. So können störende Streulichteinflüsse durch Reflektion, z.B. an der Einfassung der Lichtscheibe 8 durch die Blende 7, vermieden werden. Auf diese Weise ist ein Lichtsymbol, insbesondere ein schwebendes Lichtsymbol, z.B. für eine Leselampe oder eine Innenraumleuchte bereitstellbar.

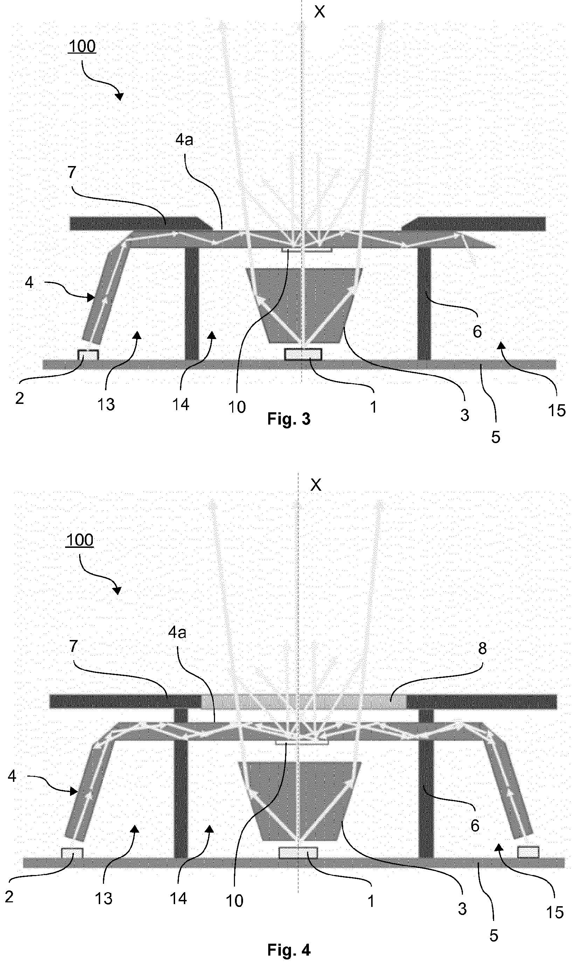

In Fig. 3 ist ein zweites Ausführungsbeispiel einer erfindungsgemäßen Vorrichtung mit einseitiger Sekundärlicht-Einkopplung dargestellt. Abweichend von dem ersten Ausführungsbeispiel einer Vorrichtung 100 nach Fig. 2, ist das zweite Ende des Zusatzlichtleiters nach Fig. 3 nicht orthogonal zu der Verlaufsrichtung der geraden optischen Strecke 4a ausgestaltet. Nach Fig. 3 ist das zweite Ende des Zusatzlichtleiters 4 in der zweiten Sekundärlichtkammer 15 derart abgeschrägt, dass das Sekundärlicht innerhalb des Zusatzlichtleiters 4 von der Zusatzlichtleiterschräge des zweiten Endes in Richtung der Leiterplatte 5 reflektiert wird. So kann das Sekundärlicht gezielt aus dem Zusatzlichtleiter austreten. Vorzugsweise ist die Zusatzlichtleiterschräge des zweiten Endes des Zusatzlichtleiters 4 gemäß Fig. 3 derart ausgebildet, dass ein einfallendes Sekundärlicht zur Auskopplung aus dem Zusatzlichtleiters 4 im Wesentlichen reflektiert wird. Insbesondere kann die Abschrägung des zweiten Endes gegenüber der Horizontalen nach Fig. 3 einen Winkel von ungefähr 30 bis 60 Grad, insbesondere 45 Grad, aufweisen. Anhand der gemäß Fig. 3 vorgesehenen Zusatzlichtleiterschräge des zweiten Endes des Zusatzlichtleiters 4 sind insbesondere störende Einflüsse von Streulicht bei der Darstellung eines schwebenden Lichtsymbols minimierbar.

Des Weiteren zeigt Fig. 3 die Ausführung der Blende 7 ohne Lichtscheibe 8. Der Sekundärlichtleiter 4 ist direkt an der Blende 7 angeordnet. Auf diese Weise ist die Öffnung der Blende 7 anhand des Sekundärlichtleiters 4, insbesondere anhand der geraden optischen Strecke 4a zweckmäßig verschlossen. Hierzu kann der Zusatzlichtleiter 4 wenigstens teilweise scheibenförmig ausgestaltet sein. Insbesondere ist die gerade optische Strecke 4a scheibenförmig ausgestaltbar, sodass die Öffnung der Blende 7 zweckmäßig verschließbar ist.

In Fig. 4 ist ein drittes Ausführungsbeispiel einer erfindungsgemäßen Vorrichtung 100 mit zweiseitiger Sekundärlicht-Einkopplung gezeigt. Im Unterschied zur Ausführungsform nach Fig. 2 weist die Vorrichtung 100 nach Fig. 4 eine zweite Sekundärlichtquelle 2 in der zweiten Sekundärlichtkammer 15 auf.

Der Zusatzlichtleiter 4 ist zur optischen Achse X der Primärlichtquelle spiegelsymmetrisch ausgebildet. Das heißt, dass sich der Zusatzlichtleiter 4 von der ersten und zweiten Sekundärlichtquelle ausgehend jeweils in einem Winkel zwischen 60 und 80 Grad in Richtung der Blende 7 erstreckt und in die gerade optische Strecke 4a übergeht. An dem Übergang in die gerade optische Strecke 4a weist der Zusatzlichtleiter 4 dabei beidseitig, also in der ersten und zweiten Sekundärlichtkammer 13; 15, eine der Blende zugewandte, abgeschrägte Außenseite, sogenannte Zusatzlichtleiterschrägen, auf. So kann ein emittiertes, an dem ersten und zweiten Ende eingekoppeltes Sekundärlicht in die gerade optische Strecke 4a des Zusatzlichtleiters 4 umgelenkt werden, vorzugsweise im Sinne einer Totalreflektion.

Die gerade optische Strecke 4a stellt nach Fig. 4 eine optische Verbindung zwischen der ersten und zweiten Sekundärlichtkammer 13; 15 dar, wobei beide Sekundärlichtkammer als Lichteintrittskammer und Lichtaustrittskammer fungieren. Im Sinne von Fig. 4 teilen sich die erste und zweite Sekundärlichtquelle den Zusatzlichtleiter 4 mit der geraden optischen Strecke 4a zur Übertragung ihres jeweils emittierten Sekundärlicht.

Gemäß der (Total-)Reflektionsbedingungen innerhalb des Zusatzlichtleiters und des beidseitig, also an beiden Enden des Zusatzlichtleiters 4, eingekoppelten Sekundärlichts, wird die Menge des auf das pigmentierte Symbol 10 einfallenden Sekundärlichts vergrößert. Auf diese Weise kann ein schwebendes Lichtsymbol anhand der Vorrichtung 100 nach Fig. 4 mit einer größeren Lichtstärke bereitgestellt werden.

### Bezugszeichenliste

- 100: Vorrichtung
- 1: Primärlichtquelle
- 2: Sekundärlichtquelle
- 3: Primäroptik
- 4: Zusatzlichtleiter
- 4a: gerade optische Strecke (des Zusatzlichtleiters)
- 5: Leiterplatte
- 6: Rippe
- 7: Blende
- 8: Lichtfenster
- 10: pigmentiertes Symbol
- 13: erste Sekundärlichtkammer
- 14: Primärlichtkammer
- 15: zweite Sekundärlichtkammer
- X: optische Achse (der Primärlichtquelle)

## Patentansprüche

1. Vorrichtung (100) zur Darstellung eines schwebenden Lichtsymbols, mit einer Blende (7), die ein Lichtfenster (8) aufweist, einer Primäroptik (3) und einer Primärlichtquelle (1), deren emittiertes Primärlicht durch die Primäroptik (3) in eine Richtung des Lichtfensters (8) gelenkt wird,
**dadurch gekennzeichnet, dass** wenigstens eine Sekundärlichtquelle (2) versetzt zu der Primärlichtquelle (1) angeordnet ist, ein Zusatzlichtleiter (4) zwischen der Primärlichtquelle (1) und dem Lichtfenster (8) verläuft, der Zusatzlichtleiter (4) ein pigmentiertes Symbol (10) aufweist und ein emittiertes Sekundärlicht der Sekundärlichtquelle (2) derart in den Zusatzlichtleiter (4) einkoppelbar ist, dass das Sekundärlicht wenigstens teilweise an dem pigmentierten Symbol (10) reflektierbar und durch das Lichtfenster (8) hindurch umlenkbar ist.

2. Vorrichtung nach Anspruch 1,
**dadurch gekennzeichnet, dass** der wenigstens eine Zusatzlichtleiter (4), der zwischen der Primärlichtquelle (1) und dem Lichtfenster (8) verläuft, in einem Abstand zu dem Lichtfenster (8) oder an dem Lichtfenster (8) angeordnet ist.

3. Vorrichtung nach einem der Ansprüche 1 oder 2,
**dadurch gekennzeichnet, dass** der Zusatzlichtleiter (4) wenigstens abschnittsweise eine Scheibenform aufweist, sodass der Zusatzlichtleiter (4) von der Vorderseite des Lichtfensters (8) aus nicht sichtbar ist.

4. Vorrichtung nach einem der vorhergehenden Ansprüche,
**dadurch gekennzeichnet, dass** das pigmentierte Symbol (10) im Bereich des Lichtfensters (8), insbesondere im Bereich einer optischen Achse (X) der Primärlichtquelle (1), auf der der Primärlichtquelle (1) zugewandten Seite des Zusatzlichtleiters (4) angeordnet ist.

5. Vorrichtung nach einem der vorhergehenden Ansprüche,
**dadurch gekennzeichnet, dass** das pigmentierte Symbol (10) mittels Tampondruck auf dem Zusatzlichtleiter (4) fixiert ist.

6. Vorrichtung nach einem der vorhergehenden Ansprüche,
**dadurch gekennzeichnet, dass** die Vorrichtung eine Primärlichtkammer (14) mit der Primärlichtquelle (1) aufweist und wenigstens eine erste Sekundärlichtkammer (13), wobei in der ersten Sekundärlichtkammer (13) die Sekundärlichtquelle (2) angeordnet ist.

7. Vorrichtung nach Anspruch 6,
**dadurch gekennzeichnet, dass** die Primärlichtkammer (14) und die wenigstens eine erste Sekundärlichtkammer (13) im Wesentlichen lichtdicht voneinander getrennt sind, insbesondere derart, dass kein direktes Sekundärlicht durch das Lichtfenster (8) hindurchtreten kann.

8. Vorrichtung nach einem der vorhergehenden Ansprüche,
**dadurch gekennzeichnet, dass** der Zusatzlichtleiter (4) mit einem ersten Ende in der ersten Sekundärlichtkammer (13), insbesondere einer Lichteintrittskammer, angeordnet ist und mit einem zweiten Ende in einer zweiten Sekundärlichtkammer (15), insbesondere ausgestaltet als eine Lichtaustrittskammer und/oder als eine zweite Lichteintrittskammer mit einer zweiten Sekundärlichtquelle (2), angeordnet ist.

9. Vorrichtung nach einem der vorhergehenden Ansprüche,
**dadurch gekennzeichnet, dass** der Zusatzlichtleiter (4) derart angeordnet ist, dass die erste und die zweite Sekundärlichtkammer (13; 15) über die dazwischenliegende Primärlichtkammer (14) hinweg optisch verbunden sind, sodass ein Sekundärlicht von der ersten Sekundärlichtkammer (13) in die zweite Sekundärlichtkammer (15) übertragbar ist.

10. Vorrichtung nach Anspruch 9,
**dadurch gekennzeichnet, dass** der Zusatzlichtleiter (4) eine gerade optische Strecke (4a) zur optischen Verbindung der ersten Sekundärlichtkammer (13) und der zweiten Sekundärlichtkammer (15) aufweist, wobei an den Enden der geraden optischen Strecke (4a) Zusatzlichtleiterschrägen zur Umlenkung des Sekundärlichts vorgesehen sind.

11. Vorrichtung nach einem der vorhergehenden Ansprüche,
**dadurch gekennzeichnet, dass** das Sekundärlicht derart in den Zusatzlichtleiter (4) einkoppelbar ist, dass innerhalb des Zusatzlichtleiters (4) im Wesentlichen die Totalreflektionsbedingung erfüllt ist.

12. Vorrichtung nach einem der vorhergehenden Ansprüche,
**dadurch gekennzeichnet, dass** die Primärlichtquelle (1) und die Sekundärlichtquelle (2) jeweils als eine Leuchtdiode vorgesehen sind, vorzugsweise angeordnet auf einer gemeinsamen Leiterplatte (5).

13. System, insbesondere ein Kraftfahrzeug und/oder ein Nutzfahrzeug, mit wenigstens einer Vorrichtung (100) gemäß einem der vorhergehenden Ansprüche.

14. Verfahren zur Darstellung eines schwebenden Lichtsymbols mit einer Vorrichtung (100) gemäß einem der vorhergehenden Ansprüche, wobei
- das Primärlicht entlang der optischen Achse (X) der Primärlichtquelle (1) anhand der Primäroptik (3) umgelenkt wird und durch das Lichtfenster (8) der Blende (7) hindurch tritt;
- das Sekundärlicht in einem Abstand zu der Primärlichtquelle (1) in den Zusatzlichtleiter (4) eingekoppelt wird, wobei entlang des Zusatzlichtleiters (4) im Wesentlichen die Totalreflektionsbedingung erfüllt wird; und
- eine Reflektion, insbesondere eine Teilreflektion, des Sekundärlichts an dem pigmentierten Symbol (10) des Zusatzlichtleiters (4) derart erfolgt, sodass wenigstens ein Teil des Sekundärlichts als Streulicht durch das Lichtfenster (8) hindurch tritt.

15. Verfahren nach Anspruch 14,
**dadurch gekennzeichnet, dass** das das pigmentierte Symbol auf der der Primärlichtquelle (1) zugewandten Unterseite des Zusatzlichtleiters (4) mittels Tampondruck aufgebracht wird.

## Claims

1. A device (100) for producing a floating light symbol comprising an aperture (7) having a light window (8), a primary optic (3) and a primary light source (1), the emitted primary light of which is directed through the primary optic (3) in a direction of the light window (8),
**characterized in that**
at least one secondary light source (2) is arranged offset from the primary light source (1), an additional light guide (4) extends between the primary light source (1) and the light window (8), the additional light guide (4) has a pigmented symbol (10), and an emitted secondary light of the secondary light source (2) can be coupled into the additional light guide (4) such that the secondary light can at least partially reflect on the pigmented symbol (10) and be deflected through the light window (8).

2. The device according to claim 1,
**characterized in that**
the at least one additional light guide (4) extending between the primary light source (1) and the light window (8) is arranged at a distance from the light window (8) or at the light window (8).

3. The device according to one of claims 1 or 2,
**characterized in that**
the additional light guide (4) is disk shaped at least in sections so that the additional light guide (4) is not visible from the front of the light window (8).

4. The device according to one of the preceding claims,
**characterized in that**
the pigmented symbol (10) is arranged on the side of the additional light guide (4) facing the primary light source (1) in the region of the light window (8), in particular in the region of an optical axis (X) of the primary light source (1).

5. The device according to one of the preceding claims,
**characterized in that**
the pigmented symbol (10) is fixed on the additional light guide (4) by means of pad printing.

6. The device according to one of the preceding claims,
**characterized in that**
the device has a primary light chamber (14) comprising the primary light source (1) and at least one first secondary light chamber (13), wherein the secondary light source (2) is arranged in the first secondary light chamber (13).

7. The device according to claim 6,
**characterized in that**
the primary light chamber (14) and the at least one first secondary light chamber (13) are separated from each other in substantially light-proof manner, in particular such that no direct secondary light can pass through the light window (8).

8. The device according to one of the preceding claims,
**characterized in that**
the additional light guide (4) is arranged with a first end in the first secondary light chamber (13), in particular a light inlet chamber, and with a second end in a second secondary light chamber (15), particularly designed as a light outlet chamber and/or as a second light inlet chamber having a second secondary light source (2).

9. The device according to one of the preceding claims,
**characterized in that**
the additional light guide (4) is arranged such that the first and the second secondary light chamber (13; 15) are optically connected via the interjacent primary light chamber (14) so that secondary light from the first secondary light chamber (13) can be transmitted to the second secondary light chamber (15).

10. The device according to claim 9,
**characterized in that**
the additional light guide (4) exhibits a straight optical path (4a) for optically connecting the first secondary light chamber (13) and the second secondary light chamber (15), wherein additional light guide beveling is provided at the ends of the straight optical path (4a) for deflecting the secondary light.

11. The device according to one of the preceding claims,
**characterized in that**
the secondary light can be coupled into the additional light guide (4) such that substantially the total reflection condition is met within the additional light guide (4).

12. The device according to one of the preceding claims,
**characterized in that**
the primary light source (1) and the secondary light source (2) are each provided as a light-emitting diode, preferably arranged on a common circuit board (5).

13. A system, in particular a motor vehicle and/or a utility vehicle, having at least one device (100) in accordance with one of the preceding claims.

14. A method for producing a floating light symbol having a device (100) in accordance with one of the preceding claims, wherein
- the primary light is deflected along the optical axis (X) of the primary light source (1) by means of the primary optic (3) and passes through the light window (8) of the aperture (7);
- the secondary light is coupled into the additional light guide (4) at a distance from the primary light source (1), wherein substantially the total reflection condition is met along the additional light guide (4); and
- the secondary light reflects, in particular partially reflects, on the pigmented symbol (10) of the additional light guide (4) such that at least a portion of the secondary light passes through the light window (8) as diffused light.

15. The method according to claim 14,
**characterized in that**
the pigmented symbol on the underside of the additional light guide (4) facing the primary light source (1) is applied by means of pad printing.

## Revendications

1. Dispositif (100) pour représenter un symbole lumineux flottant comprenant un cache (7), qui comporte une fenêtre à lumière (8), une optique primaire (3) et une source de lumière primaire (1), dont la lumière primaire émise est déviée par l'optique primaire (3) dans une direction de la fenêtre à lumière (8),
**caractérisé en ce que**
au moins une source de lumière secondaire (2) est agencée de façon décalée par rapport à la source de lumière primaire (1), un guide de lumière supplémentaire (4) s'étend entre la source de lumière primaire (1) et la fenêtre à lumière (8), le guide de lumière supplémentaire (4) présente un symbole pigmenté (10), et une lumière secondaire émise par la source de lumière secondaire (2) est susceptible d'être injectée dans le guide de lumière supplémentaire (4) de telle façon que la lumière secondaire est susceptible d'être réfléchie au moins partiellement au niveau du symbole pigmentée (10) et d'être défléchie en traversant la fenêtre lumière (8).

2. Dispositif selon la revendication 1,
**caractérisé en ce que**
ledit au moins un guide de lumière supplémentaire (4), qui s'étend entre la source de lumière primaire (1) et la fenêtre à lumière (8), est agencé à distance de la fenêtre à lumière (8) ou au niveau de la fenêtre la lumière (8).

3. Dispositif selon l'une des revendications 1 ou 2,
**caractérisé en ce que**
le guide de lumière supplémentaire (4) présente au moins par portion la forme d'un disque, de sorte que le guide de lumière supplémentaire (4) n'est pas visible depuis le côté avant de la fenêtre à lumière (8).

4. Dispositif selon l'une des revendications précédentes,
**caractérisé en ce que**
le symbole pigmenté (10) est agencé dans la région de la fenêtre à lumière (8), en particulier dans la région d'un axe optique (X) de la source de lumière primaire (1), sur le côté du guide de lumière supplémentaire (4) tourné vers la source de lumière primaire (1).

5. Dispositif selon l'une des revendications précédentes,
**caractérisé en ce que** le symbole pigmenté (10) est fixé sur le guide de lumière supplémentaire (4) au moyen d'une impression au tampon.

6. Dispositif selon l'une des revendications précédentes,
**caractérisé en ce que**
le dispositif comprend une chambre de lumière primaire (14) avec la source de lumière primaire (1) et au moins une chambre de lumière secondaire (13), dans lequel la source de lumière secondaire (2) est agencée dans la première chambre de lumière secondaire (13).

7. Dispositif selon la revendication 6,
**caractérisé en ce que**
la chambre de lumière primaire (14) et ladite au moins une première chambre de lumière secondaire (13) sont séparées l'une de l'autre de manière sensiblement étanche à la lumière, en particulier de telle manière qu'aucune lumière secondaire directe ne peut traverser la fenêtre à lumière (8).

8. Dispositif selon l'une des revendications précédentes,
**caractérisé en ce que**
le guide de lumière supplémentaire (4) est agencé avec une première extrémité dans la première chambre de lumière secondaire (13), en particulier dans une chambre d'entrée de lumière, et est agencé avec une seconde extrémité dans une seconde chambre de lumière secondaire (15), conçue en particulier comme une chambre de sortie de lumière et/ou comme une seconde chambre d'entrée de lumière avec une seconde source de lumière secondaire (2).

9. Dispositif selon l'une des revendications précédentes,
**caractérisé en ce que**
le conducteur de lumière supplémentaire (4) est agencé de telle façon que la première chambre de lumière secondaire et la seconde chambre de lumière secondaire (13 ; 15) sont reliées de manière optique via la chambre de lumière primaire (14) disposée entre celles-ci, de sorte qu'une lumière secondaire provenant de la première chambre de lumière secondaire (13) peut être transmise jusque dans la seconde chambre de lumière secondaire (15).

10. Dispositif selon la revendication 9,
**caractérisé en ce que**
le conducteur de lumière supplémentaire (4) comporte un trajet optique rectiligne (4a) pour la liaison optique de la première chambre de lumière secondaire (13) et de la seconde chambre de lumière secondaire (15), et des pentes du conducteur de lumière supplémentaire sont prévues au niveau des extrémités du trajet optique rectiligne (4a) pour dévier la lumière secondaire.

11. Dispositif selon l'une des revendications précédentes,
**caractérisé en ce que**
la lumière secondaire est susceptible d'être injectée dans le conducteur de lumière supplémentaire (4) de telle manière que la condition de réflexion totale est sensiblement satisfaite à l'intérieur du conducteur de lumière supplémentaire (4).

12. Dispositif selon l'une des revendications précédentes,
**caractérisé en ce que**
la source de lumière primaire (1) et la source de lumière secondaire (2) sont respectivement prévues comme une diode électroluminescente, agencées de préférence sur une carte à circuits commune (5).

13. Système, en particulier véhicule automobile et/ou véhicule utilitaire, comprenant au moins un dispositif (100) selon l'une des revendications précédentes.

14. Procédé pour la représentation d'un symbole lumineux flottant avec un dispositif (100) selon l'une des revendications précédentes, dans lequel
- la lumière primaire est déviée le long de l'axe optique (X) de la source de lumière primaire (1) au moyen de l'optique primaire (3) et traverse la fenêtre à lumière (8) du cache (7) ;
- la lumière secondaire est injectée dans le conducteur de lumière supplémentaire (4) à une distance de la source de lumière primaire (1), dans lequel la condition de réflexion totale est sensiblement satisfaite le long du conducteur de lumière supplémentaire (4) ; et
- une réflexion, en particulier une réflexion partielle, de la lumière secondaire a lieu au niveau du symbole pigmenté (10) du conducteur de lumière supplémentaire (4) de telle façon qu'au moins une partie de la lumière secondaire traverse la fenêtre lumière sous forme de lumière diffusée.

15. Procédé selon la revendication 14,
**caractérisé en ce que**
le symbole pigmenté est appliqué au moyen d'une impression au tampon sur la face inférieure, tournée vers la source de lumière primaire (1), du conducteur de lumière supplémentaire (4).
